# EUROPEAN PATENT SPECIFICATION

(11) **EP 0 548 729 B1**
(45) Date of publication and mention of the grant of the patent: **13.09.1995**
(21) Application number: 92121245.2
(22) Date of filing: 14.12.1992
(51) Int. Cl.: B01D 21/02, B01D 21/28, B01D 33/03

(54) **Separation tank with vibrating screen for the filtration of process water**
Abscheidetank mit Schwingsieb für die Filtration von Brauchwasser
Réservoir de séparation muni d'un tamis vibrant pour la filtration d'eaux usées

(30) Priority: 20.12.1991 IT MO910177
(43) Date of publication of application: 30.06.1993
(73) Proprietor: TECNOFORME S.p.A., 41015 Nonantola (Modena) (IT)
(72) Inventor: Bicocchi, Silvano, I-41015 Nonantola (Modena) (IT)
(74) Representative: Modiano, Guido, Dr.-Ing.

(56) References cited:
- CH-A- 375 699
- CH-A- 656 073
- DE-A- 1 483 498
- DE-C- 858 539
- FR-A- 2 517 558
- US-A- 5 015 398

## Description

The present invention relates to a separation tank with vibrating screen for the filtration of process water.

Vibrating screens used to filter water containing residues such as for example powders, flakes, shavings or the like of a material having a greater relative density than water are known.

One of the biggest disadvantages which can be observed in these screens is the rate at which the filtering perforations become obstructed, requiring frequent cleaning interventions to restore the initial filtration conditions.

In order to extend filter maintenance intervals, it is necessary to perform coarser filtrations with screens having a wider mesh or to perform filtrations with cascade tanks and screens with increasingly finer mesh.

In addition to this, the cleaning of the screens requires an extremely long time to be carried out.

A separation tank with vibrating screen having the features set forth in the preamble of claim 1, is disclosed in the prior document CH-A- 656 073.

The technical aim of the present invention is to obviate the above problems, i.e. to provide a separation tank with vibrating screen for the filtration of process water which allows effective filtration for a longer time without requiring maintenance or cleaning interventions.

An object of the present invention is to provide a separation tank with vibrating screen for the filtration of process water which allows extremely rapid and easy maintenance interventions.

Another object of the present invention is to achieve the above aim with a simple structure which is relatively easy to execute in practice, safe in use and effective in operation as well as relatively modest in cost.

This aim and these objects are achieved by a separation tank with vibrating screen for the filtration of process water, according to the present invention, and having the features set forth in claim 1.

Further characteristics and advantages of the present invention will become apparent and evident from the following detailed description of a preferred but not exclusive embodiment thereof, illustrated only by way of non-limitative example in the accompanying drawings, wherein:
figures 1 and 2 are respectively a front view and a side view of a separation tank with vibrating screen for the filtration of process water according to the invention;
figure 3 is a schematic perspective view of another embodiment of the tank of figures 1 and 2;
figure 4 is a side view of another embodiment of the tank of figures 1 and 2.

With particular reference to the above figures, the reference numeral 1 generally designates the separation tank with vibrating screen for the filtration of process water according to the invention.

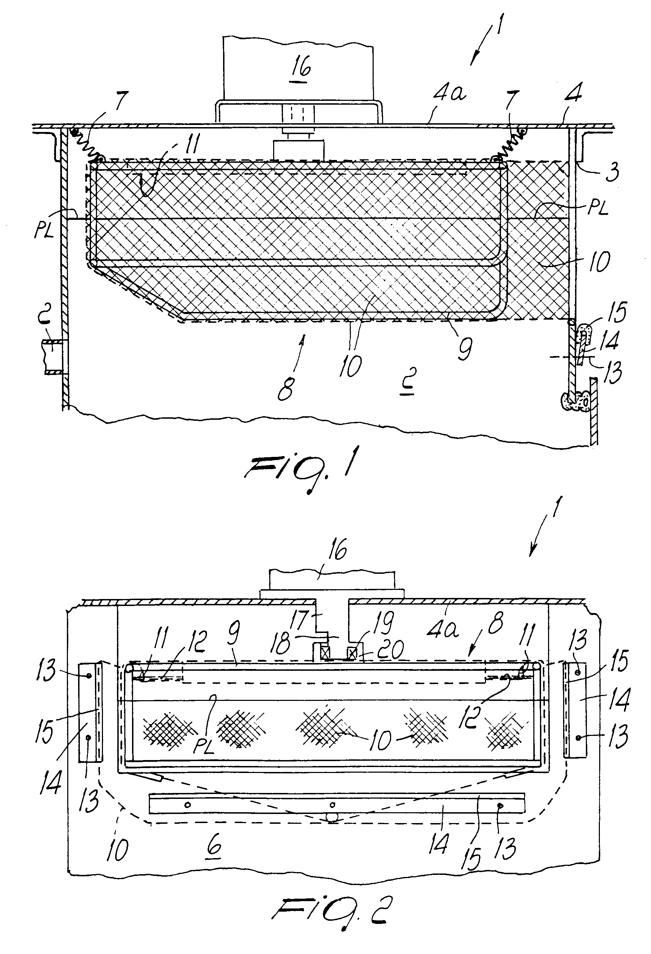

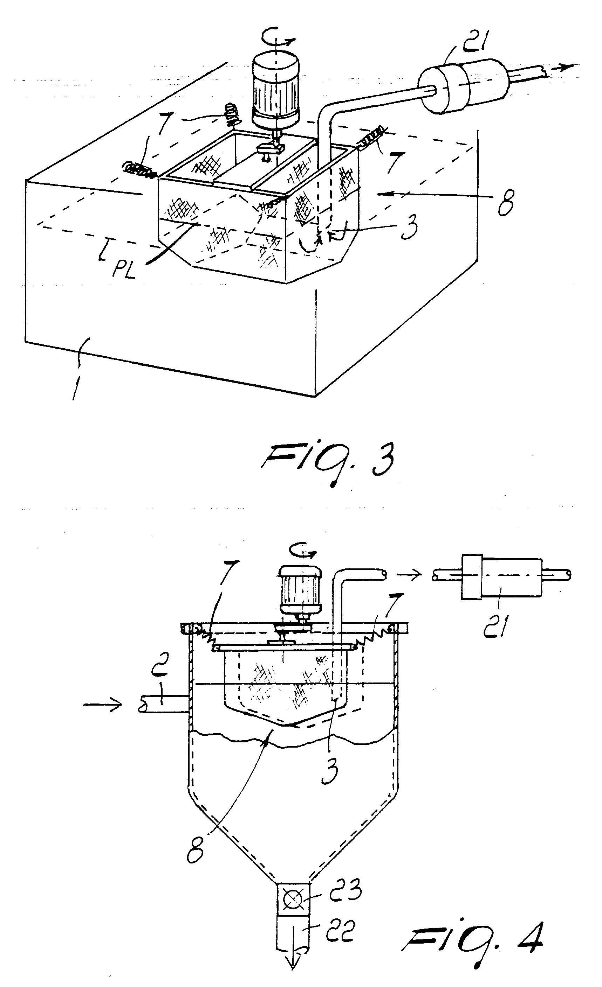

The tank is provided with an inlet 2 for the water to be treated; said inlet can be located for example approximately halfway along the elevation of a wall of the tank; the tank can have the shape of a parallelepiped (figures 1, 2 and 3) but may also be cylindrical (figure 4) and may be open along a side wall (figures 1 and 2), and the screen may also be shaped like a pocket with a parallelepipedal shape (figure 3) or a cylindrical one (figure 4).

The tank of figures 1 and 2 is described specifically hereinafter: the characteristics of the tanks of figures 3 and 4 which diversify them from the tank of figure 1 will also be described thereafter.

The tank 1 is shaped like a parallelepiped, has an outlet 3 for the removal of clean water and is furthermore provided with a cover 4 which, in the specific case, is shaped like a sort of letter H made of mutually welded strong metallic profiled elements: along one edge, the cover 4 has a hinge 5 for coupling to a side 6 of the tank.

The side 6 of the tank is provided, in an upward position, with the outlet 3 which, as shown in figures 1 and 2, is arranged like a weir for the outflow of the clean water and is rectangular in the particular case.

A screen 8 is associated with the cover 4 so as to be able to oscillate by means of four helical traction springs 7; said screen is constituted by a grid-like structure of metallic supporting rods 9 on which a removable sheet 10 made of filtering material is stretched: advantageously, the structure 9 has two sides of a certain height and a centerline which reaches a lower level, so as to provide a sort of inverted truss with walls inclined in the shape of a V: at the front, the grid-like structure defines a front inclined edge.

The sheet 10 is arranged so that it is substantially stretched on the grid-like structure, and the edges of the upper sides are folded inward so as to define a sort of perimetric hem 11 in which a cord 12 can be passed; pulling said cord stretches the cloth but allows its rapid removal.

The vertical wall of the grid-like structure which is directed toward the wall 6 of the tank is not covered by the sheet 10, and the sheet which covers the sides and the bottom of the grid-like structure is extracted from the tank through the outlet 3; strips 14 are fixed, by means of screws 13, to the wall 6 of the tank at the sides of the outlet 3, and end on one side with gaskets 15 made of a material such as rubber: the fixing of the strips 14 allows to sealingly couple the open edge of the sheet 10 to the wall 6.

An electric drive unit 16 with a vertical axis is fixed to the central cross-member 4a of the cover 4, and its shaft 17 extends downward beyond the cross-member 4a and is provided, in a downward position, with an eccentric element 18 which, by virtue of the interposition of a rolling ball bearing 19, is coupled to a bush 20 which is rigidly coupled to the grid-like structure 9.

By means of the actuation of the motor 16, vibrations on a horizontal plane are transmitted to the screen at a frequency which can be adjusted by means of an apparatus suitable to vary the rotation rate of the motor; the springs damp the dynamic actions which would rapidly lead to the fatigue breakage of the shaft or in any case to damage of the motor.

Operation of the separation tank according to the invention is as follows:
by feeding the tank 1, through inlet 2, with the water to be treated, the level of the tank rises until it affects the screen (the free surface of the water is designated by PL): the motor 16 is actuated and vibrates the structure 9 and thus the screen.

When the particles present in the water make contact with the vibrating walls of the screen, they are practically repelled by them, whereas the water penetrates in the screen 8.

The clean water which collects in the screen 8 leaves the tank through the weir-like outlet 3.

Rotation of the cover about the hinge 5 allows extremely rapid and easy operations for maintenance and replacement of the sheet 10 of the screen.

In other envisaged versions, figures 3 and 4, the screen is supported in the middle of the tank and the outlet 3 for the removal of the water is constituted by the suction inlet of one or more pumps 21 for the removal of the clean water.

Figure 4 illustrates a tank with a cylindrical screen, and in the bottom of the tank there is a duct 22 provided with a cock 23 for the removal of the turbid liquid.

It is stressed that the inclined bottom of the screen increases the effect of repulsion of the suspended particles due to the vibrations.

It has been observed that the vibration, in addition to keeping the filtering wall clean, since it progressively removes its deposits, makes it more difficult for the particles to pass through the mesh of the screen, since due to the vibrations the mesh is more difficult to pass for the particles (if a particle can pass through a mesh when the screen is motionless, the same particle is no longer able to center the opening of said mesh when the screen vibrates).

In practice, the particles which deposit on the outer surface of the screen fall, by virtue of the vibration of said screen, onto the bottom of the tank and the filtering surface is always clean.

The invention thus conceived therefore achieves the intended aim and objects.

All the details may furthermore be replaced with other technically equivalent ones.

In practice, the materials employed, as well as the shapes and dimensions, may be any according to the requirements, without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Separation tank with vibrating screen for the filtration of process water comprising a tank (1) which has an inlet (2) for the water to be treated and in which a box-like screen (8) is oscillatably mounted, said screen being associated with vibration means (16) and said tank having an outlet (3) for the removal of the clean water characterized in that the upper edge of said screen is arranged at a higher level than the free surface (PL) of the water to be treated, and in that said vibration means comprise an eccentric coupling (18-20) of the screen with respect to a a drive unit (16) with a vertical axis, whereby vibrations produced by said vibration means entailing oscillations on a horizontal plane.

2. Tank according to claim 1, characterized in that said tank has, in its upper region, a weir-like outlet (3) at which the edge of an open side of the screen is sealingly coupled, the treated water flowing out through said outlet.

3. Tank according to claim 1 or 2, characterized in that said screen comprises a grid (9) made of metallic material on which a removable sheet (10) made of filtering material is stretched.

4. Tank according to claim 3, characterized in that said grid defines three substantially vertical side walls and a bottom which has two sides of a certain height and a centerline which reaches a lower level than that of said two sides, said bottom being adapted to stretch the inclined filtering sheet so as to provide, by virtue of the vibration of the screen, an increased effect of repulsion of the suspended particles.

5. Tank according to claim 3, characterized in that said eccentric coupling (18-20) comprises an eccentric element (18) coupled to a bush (20), a ball bearing (19) being interposed between said eccentric element and said bush, said bush being further rigidly coupled to said grid (9), and said drive unit being fixed to an upper cross-member (4a) of the tank.

6. Tank according to claim 3, characterized in that said grid has, at its four upper corners, respective helical traction springs (7) which are in turn coupled to a tank cover (4) which is hinged along the upper edge of the tank which is affected by the water outlet.

7. Tank according to claim 4, characterized in that said removable sheet (10) is stretched on said grid-like structure (9) so as to cover the bottom and the three vertical side walls thereof while at the open side of the screen facing said outlet (3) means (13-15) are provided for sealingly fixing edges of said sheet made of filtering fabric to the outlet (3).

## Patentansprüche

1. Abscheidetank mit Schwingsieb für die Filtration von Brauchwasser, der einen Tank (1) aufweist, der einen Einlaß (2) für das zu behendelnde Wasser hat und in dem ein kastenähnliches Sieb (8) oszillierbar eingebaut ist, wobei das Sieb mit Vibrationsmitteln (16) verbunden ist und der Tank einen Auslaß (3) für die Entfernung des reinen Wassers hat, dadurch gekennzeichnet, daß die obere Kante des Siebs auf einem höheren Niveau als die Oberfläche (PL) des zu behandelnden Wassers angeordnet ist und daß die Vibrationsmittel eine exzentrische Kupplung (18 - 20) des Siebs in Bezug auf eine Antriebseinheit (16) mit einer senkrechten Achse aufweist, wodurch durch die Vibrationsmittel erzeugte Vibrationen Oszillationen in einer waagrechten Ebene verursachen.

2. Tank nach Anspruch 1, dadurch gekennzeichnet, daß der Tank in seinem oberen Bareich einen wehrähnlichen Auslaß (3) aufweist, an den die Kante einer offenen Seite das Siebs dichtend angeschlossen ist, wobei das behandelte Wasser durch den Auslaß hinausfließt.

3. Tank nach Anspruch 1 oder 2, dadurch gekennzeichnet, daß das Sieb ein Gitter (9) aus Metall umfaßt, über das eine entfernbare Bahn (10) aus Filtermaterial gezogen ist.

4. Tank nach Anspruch 3, dadurch gekennzeichnet, daß das Gitter drei im wesentlichen senkrechte Wandungen und einen Boden bildet, der zwei Seiten einer bestimmten Höhe und eine Mittellinie hat, die auf einem niedrigeren Niveau als das der beiden Seiten liegt, und daß der Boden zum Strammziehen der geneigten Filterbahn geeignet ist, um aufgrund der Vibration der Bahn eine gesteigerte Abstoßungswirkung für die verteilten Teilchen zu schaffen.

5. Tank nach Anspruch 3, dadurch gekennzeichnet, daß die exzentrische Kupplung (18 - 20) ain Exzenterelement (18) umfaßt, das an eine Buchse (20) gekuppelt ist, ein Kugellager (19) zwischen dem Exzenterelement und der Buchse eingefügt ist, die Buchse weiterhin starr an dem Gitter (9) angebracht ist und die Antriebseinheit an einem oberen Querglied (4a) des Tanks angebracht ist.

6. Tank nach Anspruch 3, dadurch gekennzeichnet, daß das Gitter an seinen vier oberen Ecken jeweils Wendelzugfedern (7) hat, die ihrerseits an eine Tankabdeckung (4) angeschlossen sind, die entlang der oberen Kante des Tanks klappbar ist, die durch den Wasserauslaß bestimmt ist.

7. Tank nach Anspruch 4, dadurch gekennzeichnet, daß die entfernbare Bahn (10) über das gitterartige Gebilde (9) so gezogen ist, daß sie den Boden und die drei senkrechten Seitenwandungen davon überdeckt, wogegen an der offenen, dem Auslaß (3) zugeordneten Seite des Siebs Mittel (13 - 15) vorgesehen sind, um Kanten der aus Filtermaterial gemachten Bahn an dem Auslaß (3) dichtend anzubringen.

## Revendications

1. Réservoir de séparation à tamis vibrant dans la filtration d'eaux usées, comprenant un réservoir (1) qui comporte une entrée (2) pour l'eau à traiter et dans lequel un tamis en forme de boîte (8) est monté de façon oscillante, ledit tamis étant associé à des moyens de vibration (16) et ledit réservoir comportant une sortie (3) pour l'évacuation de l'eau propre, caractérisé en ce que le bord supérieur dudit tamis est placé à un niveau supérieur à la surface libre (PL) de l'eau à traiter, et en ce que lesdits moyens de vibration comprennent un accouplement excentré (18-20) du tamis à un groupe d'entraînement (16) à axe vertical, de sorte que les vibrations produites par lesdits moyens de vibration engendrent des oscillations dans un plan horizontal.

2. Réservoir suivant la revendication 1, caractérisé en ce que ledit réservoir comporte, dans sa région supérieure, une sortie en forme de déversoir (3) à l'endroit de laquelle le bord d'un côté ouvert du tamis est relié de façon étanche, l' eau traitée s'écoulant par ladite sortie.

3. Réservoir suivant la revendication 1 ou 2, caractérisé en ce que ledit tamis comprend une grille (9) en métal sur laquelle est tendue une feuille amovible (10) en matière filtrante.

4. Réservoir suivant la revendication 3, caractérisé en ce que ladite grille définit trois parois latérales sensiblement verticales et un fond ayant deux côtés d'une certaine hauteur et un axe central qui atteint un niveau inférieur à celui des deux côtés, ledit fond étant prévu pour tendre la feuille filtrante inclinée de façon à créer, grâce à la vibration du tamis, un effet accru de répulsion des particules en suspension.

5. Réservoir suivant la revendication 3, caractérisé en ce que ledit accouplement excentré (18-20) comprend un élément excentrique (18) accouplé à un manchon (20), un roulement à billes (19) étant interposé entre ledit élément excentrique et ledit manchon, ledit manchon étant en outre rigidement relié à ladite grille (9) et ledit groupe d'entraînement étant fixé à une traverse supérieure (4a) du réservoir.

6. Réservoir suivant la revendication 3, caractérisé en ce que ladite grille comporte, à ses quatre angles supérieurs, des ressorts de traction hélicoïdaux respectifs (7) qui sont eux -mêmes fixés à un couvercle de réservoir (4) qui est articulé le long du bord supérieur du réservoir qui correspond à la sortie d'eau.

7. Réservoir suivant la revendication 4, caractérisé en ce que ladite feuille amovible (10) est tendue sur ladite structure de grille (9) de manière à couvrir son fond et ses trois parois latérales verticales tandis que, du côté ouvert du tamis en regard de ladite sortie (3), des moyens (13-15) sont prévus pour fixer de façon étanche les bords de ladite feuille de toile filtrante à la sortie (3).
